Europäisches Patentamt

(19) European Patent Office

Office européen des brevets

(11) Numéro de publication: **0 011 347**
**B1**

(12) **FASCICULE DE BREVET EUROPEEN**

(45) Date de publication du fascicule du brevet: **01.12.82**

(51) Int. Cl.³: **H 01 G 1/11, H 01 G 4/00**

(21) Numéro de dépôt: **79200667.8**

(22) Date de dépôt: **13.11.79**

(54) *Procédé pour fabriquer un condensateur dont le boîtier est muni d'un pli extensible en cas de surpression.*

(30) Priorité: **20.11.78 FR 7832623**

(43) Date de publication de la demande:
**28.05.80 Bulletin 80/11**

(45) Mention de la délivrance du brevet:
**01.12.82 Bulletin 82/48**

(84) Etats contractants désignés:
**DE FR GB IT NL SE**

(56) Documents cités:
**DE - B - 1 148 331**
**FR - A - 2 174 904**
**FR - A - 2 331 136**

(73) Titulaire: **R.T.C. LA RADIOTECHNIQUE-
COMPELEC Société anonyme dite:**
**51 rue Carnot**
**F-92156 Suresnes (FR)**
(84) **FR**

(73) Titulaire: **N.V. Philips' Gloeilampenfabrieken**
**Groenewoudseweg 1**
**NL-5621 BA Eindhoven (NL)**
(84) **DE GB IT NL SE**

(72) Inventeur: **Deschanels, François**
**Société civile S.P.I.D. 209 rue de L'Université**
**F-75007 Paris (FR)**
Inventeur: **Gard, Roger**
**Société civile S.P.I.D- 209 rue de L'Université**
**F-75007 Paris (FR)**

(74) Mandataire: **Pinchon, Pierre et al,**
**Société Civile S.P.I.D. 209 rue de L'Université**
**F-75007 Paris (FR)**

Courier Press, Leamington Spa, England.

Procédé pour fabriquer un condensateur dont le boîtier est muni d'un pli extensible
en cas de surpression

L'invention concerne un procédé pour la fabrication d'un condensateur qui comporte un boîtier fermé par un fond, un enroulement avec des connexions électriques débouchant à travers l'extrémité du boîtier opposée au fond, condensateur qui possède une sécurité contre l'explosion par la rupture d'au moins une des connexions en un endroit affaibli de celle-ci, du fait de l'extension d'un pli du boîtier et de l'ancrage de cette connexion à une pièce auxiliaire.

Un tel condensateur convient en particulier pour être utilisé dans des installations d'éclairage par lampes fluorescentes. Lorsqu'un tel condensateur est soumis à une surcharge survenant, par exemple, à la suite d'un court-circuit dans l'installation, il se produit en fort dégagement de gaz à l'intérieur de l'enroulement du condensateur et, en conséquence, une augmentation de pression dans le boîtier du condensateur. Toutefois, le condensateur n'explose pas du fait que l'augmentation de pression en question entraîne l'extension du pli du boîtier, et par voie de conséquence, la connexion de l'enroulement ancrée dans la pièce auxiliaire, se trouve rompue. De ce fait, l'enroulement du condensateur est déconnecté de l'installation qui est alors hors service et l'augmentation de pression dans le boîtier est stoppée.

Le document de brevet FR—A—2 331 136 décrit un condensateur qui appartient au genre mentionné dans le préambule et dans lequel l'enroulement est placé entre le plan du pli extensible et le fond du boîtier alors que, pour sa part, la pièce auxiliaire est logée de l'autre côté du pli extensible et est constituée par le couvercle obturant le boîtier. Parmi les connexions de l'enroulement de condensateur, l'une comporte un endroit affaibli. Lorsqu'une forte pression se produit à l'intérieur du boîtier, cette connexion tendue entre la pièce auxiliaire et l'enroulement se rompt à l'endroit affaibli.

Pour l'assemblage des constituants du condensateur connu, le procédé décrit ci-après semble s'imposer. En partant du boîtier nécessaire, on pose dans celui-ci l'enroulement de condensateur et on réalise alors le pli extensible. On fait passer ensuite les connexions de l'enroulement à travers les différentes pièces annexes et à travers le couvercle. puis on place ces pièces à l'intérieur du boîtier, au-dessus du pli extensible, tandis qu'on fixe les deux connexions sur le couvercle. Enfin, on bloque en position le couvercle en formant un bord rabattu du boîtier. Il s'agit là d'un procédé relativement onéreux du fait qu'il nécessite un temps opératoire assez long. De plus, étant donné que l'enroulement est très vulnérable, les opérations mécaniques effectuées après la pose de l'enroulement dans le boîtier doivent être exécutées avec prudence et une grande précision. En particulier, il y a lieu de manipuler avec prudence et précision l'outil qui, pour la réalisation du pli extensible, doit être introduit dans le boîtier contenant l'enroulement, cet outil devant par la suite être retiré en prenant les mêmes précautions.

Le but de l'invention consiste à éliminer les inconvénients en question.

A cet effet, selon la présente invention, un procédé pour fabriquer un condensateur du type mentionné dans le préambule est notamment remarquable en ce que, dans le fond du boîtier, on introduit la pièce auxiliaire munie d'une ouverture évasée, la forme évasée étant dirigée vers le fond, on réalise ensuite le pli qui s'appuie sur la pièce auxiliaire, puis on introduit une résine synthétique durcissable pour au moins remplir l'ouverture et, tandis que la résine n'est pas encore durcie, on place au-dessus de la pièce auxiliaire l'enroulement muni de ses connexions, une boucle façonnée dans une connexion, comportant ledit endroit affaibli étant immergée dans la résine contenue dans ladite ouverture pour déterminer ainsi, par durcissement ultérieur de la résine, l'ancrage de cette connexion.

La construction du condensateur selon l'invention est relativement simple. Pour la formation du pli dans le boîtier, on utilise la pièce auxiliaire comme contre-outil qui ne doit pas être retiré ensuite du boîtier puisque celui-ci va servir à l'ancrage d'une des connexions électriques. L'emploi d'un outil auxiliaire se trouve ainsi économisé. De plus, la pièce auxiliaire n'étant de loin pas aussi fragile que l'enroulement de condensateur, l'exécution du pli sur la boîtier peut être réalisée sans les précautions qui sont indispensables dans la mise en oeuvre du procédé connu et décrit précédemment.

Dans une variante d'exécution préférée du procédé selon l'invention, ce procédé est remarquable en ce qu'on utilise, en tant que résine synthétique, un mélange de polyol et d'isocyanate formant après polymérisation une mousse durcie du polyuréthane qui remplit, à l'intérieur du boîtier, le volume non délimité par l'enroulement, par ses connexions et par la pièce auxiliaire, et en ce que la quantité introduite de ce mélange est telle que, limitée audit volume, le taux d'expansion de cette résine soit compris entre 1,2 et 1,6.

Il est utile de prévoir une adhérence médiocre entre la résine et la pièce auxiliaire; ces deux matériaux forment entre eux une liaison faible qui se rompt lorsqu'un dégagement de gaz se produit dans l'enroulement provoque une certaine traction sur cette liaison.

Dans l'espace ainsi formé par la liaison rompue entre la résine et la pièce auxiliaire, s'établit ensuite une pression qui provoque l'extension du pli, laquelle à son tour entraîne la rupture de la connexion ancrée. Le condensateur est ainsi mis hors service. Par ailleurs, selon cette variante d'exécution, l'enroulement de condensateur se trouve entièrement enveloppé de résine synthétique de sorte que des détériorations des différentes couches formant l'enroulement dues à l'action des gaz de l'atmosphère sont évitées. De telles détériorations sont connues avec les condensateurs dont l'enroulement est laissé au contact des gaz de l'atmosphère; ces détériorations affectent particulièrement les extrémités de l'enroulement et nuisent à la durée de vie de tels condensateurs.

La description qui va suivre, en regard des dessins annexés, le tout donné à titre d'exemple, fera bien comprendre comment l'invention peut être réalisée.

La figure 1 est une coupe longitudinale d'un condensateur fabriqué selon le procédé conforme à l'invention.

La figure 2 est une vue partielle, en coupe longitudinale, d'un condensateur fabriqué selon une variante préférée du procédé de l'invention.

La figure 3 est une vue en perspective d'une connexion de l'enroulement de ce condensateur.

La figure 4 montre la même partie du condensateur que la figure 2, mais après qu'une surpression se soit produite dans le boîtier de ce condensateur.

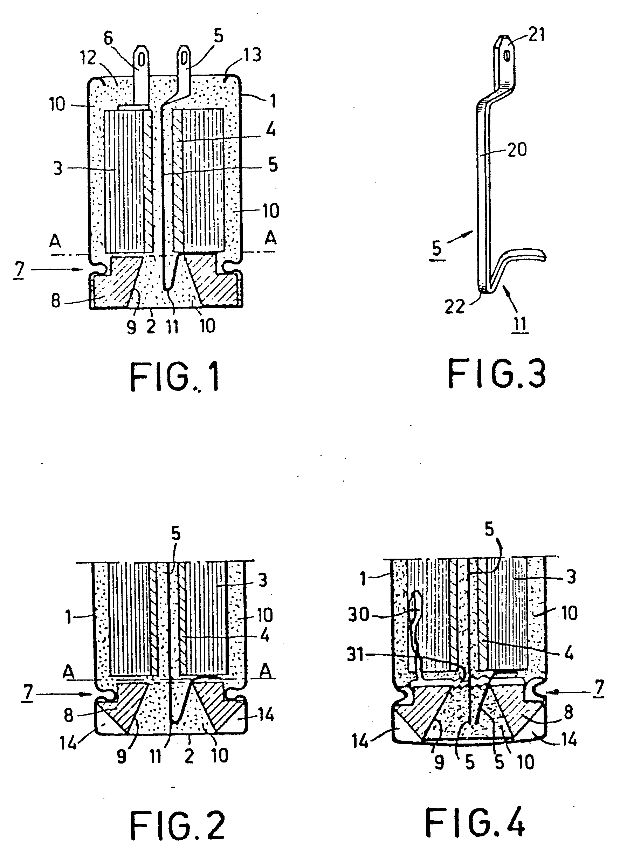

La figure 1 montre en coupe longitudinale un condensateur dont le boîtier 1 a une de ses extrémités fermée par un fond 2 et qui contient un enroulement 3 de condensateur. Celui-ci a été façonné sur un tube isolant 4 faisant office de support et comporte également des connexions électriques 5 et 6 débouchant vers l'extérieur par l'extrémité du boîtier 1 qui est située à l'opposé du fond 2. Le boîtier 1 est muni d'un pli extensible 7 qui peut s'étirer dans la direction axiale de l'enroulement 3 et dont le plan sépare l'enroulement 3 d'une pièce auxiliaire 8 servant à l'ancrage d'une des connexions électriques 5 de l'enroulement 3. La pièce auxiliaire 8 est elle-même enfermée entre le pli extensible 7 et le fond 2 du boîtier. En outre, ladite pièce auxiliaire 8 est munie d'une ouverture 9 dont la dimension va en augmentant à mesure que l'on s'approche du fond 2 du boîtier 1. Ladite ouverture 9 est remplie d'un résine synthétique 10 dans laquelle la connexion électrique 5 est ancrée à l'aide d'une boucle 11 façonnée dans cette connexion.

A l'intérieur du boîtier 1, le volume non délimité par l'enroulement 3, par ses connexions 5 et 6, par la pièce auxiliaire 8 (et en général toutes les pièces constitutives du condensateur) est rempli entièrement par la résine synthétique 10 qui n'adhère que faiblement à la pièce auxiliaire 8 et qui forme, à l'extrémité du boîtier située à l'opposé du fond 2, un élément obturateur 12 laissant dépasser vers l'extérieur les connexions électriques 5 et 6.

La réalisation du condensateur ainsi décrit ne pose aucune difficulté. On part d'un boîtier cylindrique 1 en aluminium, la pièce auxiliaire 8, réalisée par exemple en polyamide (matière mieux connue sous l'appellation de "Nylon"), est placée dans le boîtier 1 tandis qu'on forme ensuite le pli extensible 7. Lors du façonnage du pli 7, la pièce auxiliaire 8 est utilisée comme contre-outil qui ne doit pas être retiré ensuite du boîtier puisque celui-ci va servir également à l'ancrage de la boucle 11. On forme encore à l'extrémité du boîtier 1, opposée au fond 2 un bord rabattu 13. C'est alors qu'on introduit dans le boîtier 1 une quantité déterminée de résine synthétique dont le temps de durcissement est relativement bref, mais suffisant cependant pour permettre l'introduction de l'enroulement 3, au-dessus de la pièce auxiliaire 8 de manière que la boucle 11 de la connexion 5 pénètre dans l'ouverture 9 de la pièce auxiliaire 8, tout ceci tandis que la résine est encore à l'état fluide. L'enroulement 3 est formé par exemple d'un feuille de polypropylène d'épaisseur comprise entre $6.10^{-6}$ m et $12.10^{-6}$ m, métallisée dans une enceinte sous vide par une couche d'aluminium d'épaisseur comprise entre $15.10^{-9}$ m et $30.10^{-9}$ m. Comme résine, on utilise avantageusement un mélange de polyol et d'isocyanate en quantités sensiblement égales, ledit mélange polymérisant après quelques minutes et formant, par expansion, une mousse dont la dureté finale n'est pas aussi élevée que celle d'une résine compacte et qui de plus, peut être ajustée au degré désiré. La quantité de résine synthétique introduite dans le boîtier 1 est choisie de manière qu'après expansion sous forme de mousse, celle-ci remplisse tous les interstices disponibles du contenu du boîtier et ait tendance à occuper un volume encore plus grand si on la laissait s'expanser librement. Aussi, pendant la phase d'expansion et de durcissement de la résine, on limite l'expansion de mousse au contenu intérieur du boîtier en appliquant un flasque contre l'extrémité ouverte du boîtier, flasque qui comporte des logements nécessaires pour le passage des connexions vers l'extérieur du boîtier. Après durcissement de la résine, on retire le flasque et le condensateur est prêt. L'élément obturateur 12 du boîtier 1 se trouve du même coup réalisé par le matelas de résine retenu sous le bord rabattu 13 du boîtier.

La figure 2 illustre par une coupe longitudinale un condensateur selon une variante préférée de réalisation de l'invention. Sur la figure 2, les éléments qui correspondent à ceux de la figure 1 ont été indiqués par les mêmes références. La pièce auxiliaire 8 affecte ici une forme tronquée et délimite avec le fond 2 et la paroi du boîtier 1 un espace annulaire 14 qui ne contient pas de résine synthétique. L'utilité de cet espace annulaire 14 est expliquée plus loin dans l'exposé. La figure 3 est une vue en perspective de la connexion 5, réalisée à partir d'un ruban métallique 20 qui, près d'une de ses extrémités, comporte un oeillet de connexion 21 et, à proximité de l'autre extrémité, présente au niveau de la boucle 11 un endroit affaibli 22. La fabrication en série d'une telle connexion est aisée. Elle est peu onéreuse du fait qu'elle peut être réalisée en une simple opération d'estampage.

La figure 4 montre le même condensateur que la figure 2, mais après qu'une surpression se soit produite dans le boîtier du condensateur. Lorsqu'un dégagement important de gaz se produit dans l'enroulement 3 du condensateur, ce qui sur la figure est indiqué schématiquement par 30, et peut provenir d'un court-circuit dans l'installation, les gaz se propagent principalement selon la direction longitudinale de l'enroulement 3 du fait de l'adhérence faible de la résine sur l'enroulement et du fait que les gaz peuvent cheminer également le long de la paroi du boîtier, légèrement dilaté. Une traction s'exerce au niveau de la section A—A qui comprend l'interface de liaison entre la résine synthétique 10 et la pièce auxiliaire 8. Du fait de la faible adhérence recherchée entre la résine et la pièce auxiliaire 8, la liaison est faible de sorte qu'elle se rompt comme le montre la référence 31. Dans l'espace 31 ainsi formé, s'établit ensuite une pression qui provoque l'extension du pli 7, seule partie du boîtier 1 aisément déformable sous l'action de la pression intérieure. La boucle 11 de la connexion 5 qui est ancrée dans la résine synthétique 10, se rompt à l'endroit affaibli 22 de sorte que le condensateur se trouve maintenant hors service. Pour cette raison, le condensateur n'explose pas. L'espace annulaire 14, exempt de résine, fait office d'élément de sécurité supplémentaire étant donné que dans le cas où il se produirait un dégagement de gaz extrêmement brutal, ce gaz a la faculté de se détendre dans ledit espace annulaire 14 et rend ainsi encore plus sûr le fonctionnement du système de sécurité. Le fait d'utiliser comme résine synthétique 10 une mousse durcie de polyuréthane offre l'avantage que la dureté de cette mousse n'est pas excessive. Ainsi la résine synthétique ne contrecarre pas l'extension du pli 7 dans le cas de surpression dans le boîtier 1. En pratique, il s'est avéré excellent de choisir un degré d'expansion de la mousse compris entre 1,2 et 1,6.

## Revendications

1. Procédé pour la fabrication d'un condensateur qui comporte un boîtier (1) fermé par un fond (2), un enroulement (3) avec des connexions électriques (5, 6) débouchant à travers l'extrémité du boîtier opposée au fond (2), condensateur qui possède une sécurité contre l'explosion par la rupture d'au moins une des connexions en un endroit affaibli de celle-ci, du fait de l'extension d'un pli (7) du boîtier et de l'ancrage de cette connexion à une pièce auxiliaire (8), caractérisé en ce que dans le fond (2) du boîtier, on introduit la pièce auxiliaire (8) munie d'une ouverture (9) évasée, la forme évasée étant dirigée vers le fond (2), on réalise ensuite le pli (7) qui s'appuie sur la pièce auxiliaire (8), puis on introduit une résine synthétique (10) durcissable, pour au moins remplir l'ouverture (9) et, tandis que la résine n'est pas encore durcie, on place au-dessus de la pièce auxiliaire (8) l'enroulement (3) muni de ses connexions, une boucle (11) façonnée dans une connexion (5), comportant ledit endroit affaibli (22), étant immergée dans la résine contenue dans ladite ouverture (9) pour déterminer ainsi, par durcissement ultérieur de la résine, l'ancrage de cette connexion.

2. Procédé selon la revendication 1, caractérisé en ce qu'on utilise, en tant que résine synthétique (10) un mélange de polyol et d'isocyanate formant après polymérisation une mousse durcie de polyuréthane qui remplit, à l'intérieur du boîtier (1), le volume non délimité par l'enroulement (3), par ses connexions (5, 6) et par la pièce auxiliaire (8), et en ce que la quantité introduite de ce mélange est telle que, limitée audit volume, le taux d'expansion de cette résine (10) soit compris entre 1,2 et 1,6.

3. Procédé selon l'une des revendications 1 ou 2 par lequel on aménage, au sein du boîtier (1), une chambre d'expansion des gaz, caractérisé en ce qu'on crée ladite chambre en donnant une forme tronquée à la pièce auxiliaire (8) de sorte qu'elle délimite avec le boîtier (1) un espace annulaire (14) exempt de résine synthétique (10).

## Patentansprüche

1. Verfahren zum Herstellen eines Kondensators mit einem durch einen Boden (2) abgeschlossenen Gehäuse (1), mit einer Wicklung (3), die elektrische Anschlüsse (5, 6) aufweist, die an der dem Boden (2) gegenüberliegenden Gehäuseseite austreten, wobei der Kondensator einen Explosionsschutz durch Bruch einer Sollbruchstelle an zumindest einem der Anschlüsse besitzt, derart, daß sich eine Falte (7) im Gehäuse dehnt und der Anschluß an einem Hilfsstück (8) verankert ist, dadurch gekennzeichnet, daß das mit einer erweiteren Öffnung (9) versehene Hilfsstück (8) in den Boden (2) des Gehäuses eingebracht wird, wobei die Erweiterung dem Boden (2) zugekehrt ist, daß danach die Falte (7), die sich auf dem Hilfsstück (8) abstützt, realisiert wird, daß darauf ein synthetisches Harz (10) eingebracht wird, welches zumindest die Öffnung (9) ausfüllt und daß die Wicklung (3) mit ihren Anschlüssen bei noch nicht ausgehärtetem Harz oberhalb des Hilfsstückes (8) untergebracht wird, wobei ein gekrümmter Teil (11) an einem Anschluß (5), der die Sollbruchstelle (22) enthält, in das in der erwähnten Öffnung (9) enthaltene Harz eingetaucht wird, um so die Verankerung dieses Anschlusses nach Aushärten des Harzes zu bewirken.

2. Verfahren nach Anspruch 1, dadurch gekennzeichnet, daß als synthetisches Harz (10) ein Gemisch aus einem mehrwertigen Alkohol (Polyol) und Isocyanat verwendet wird, das nach der Polymerisation einen ausgehärteten Polyurethanschaum bildet, der im Inneren des Gehäuses (1) den nicht von der Wicklung (3), von ihren Anschlüssen (5, 6) und vom Hilfsstück (8) eingenommenen Raum ausfüllt, und daß die eingeführte Gemischmenge derart gewählt wird, daß das Ausbehnungsverhältnis des Harzes (10) in bezug auf diesen Raum 1,2 bis 1,6 ist.

3. Verfahren nach einem der Ansprüche 1 oder 2, mit welchem im Inneren des Gehäuses (1) eine Kammer für die Ausdehnung von Gasen geschaffen wird, dadurch gekennzeichnet, daß die Kammer dadurch gebildet wird, daß dem Hilfsstück (8) die Form eines stumpfen Kegels gegeben wird, der mit dem Gehäuse (1) einem ringförmigen Raum (14) bildet, welcher nicht mit dem synthetischen Harz (10) gefüllt ist.

**Claims**

1. A method of manufacturing a capacitor which comprises a housing (1) closed by a bottom (2), a capacitor roll (3) having electric connections (5, 6), which project through the end of the housing opposite to the bottom (2), which capacitor has an explosion safety by the interruption of at least one of the connections in a weakened place thereof due to the expansion of a fold (7) in the housing wall and the anchorage of said connection to an auxiliary member (8), characterized in that at the bottom (2) of the housing the auxiliary member (8), which comprises a flared aperture (9), the flared shape being directed towards the bottom (2), is introduced, the fold (7) which bears on the auxiliary member (8) is then made, a curable synthetic resin (10) is then introduced to fill at least the aperture (9) and, while the resin has not yet cured, the roll (3) provided with its connections is placed above the auxiliary member (8), a loop (11) formed in one connection (5) and comprising the said weakened place (22) being immersed in the resin contained in the said aperture (9) to thus achieve the anchorage of said connection by the subsequent curing of the resin.

2. A method as claimed in Claim 1, characterized in that as a synthetic resin (10) is used a mixture of polyol and isocyanate forming after polymerisation a hardened form of polyurethane which in the interior of the housing (1) fills the volume not occupied by the roll (3), by its connections (5, 6) and by the auxiliary member (8), and in that the introduced quantity of said mixture is such that, with respect to said volume, the expansion factor of said resin (10) is between 1.2 and 1.6.

3. A method as claimed in any of the Claims 1 or 2 by which there is provided a gas expansion chamber in the housing (1), characterized in that the said chamber is set up by giving the auxiliary member (8) such a truncated shape that it bounds with the housing (1) an annular space (14) which is free from synthetic resin (10).

FIG.1

FIG.3

FIG.2

FIG.4